# EUROPÄISCHE PATENTSCHRIFT

(11) **EP 2 233 028 B1**
(45) Veröffentlichungstag und Bekanntmachung des Hinweises auf die Patenterteilung: **07.06.2017**
(21) Anmeldenummer: 10002946.1
(22) Anmeldetag: 19.03.2010
(51) Int. Cl.: A44C 27/00, A44C 17/00, B29C 39/10, B44C 3/04, B29L 31/00, B29C 39/00, B44C 5/04, B44C 3/00, B29C 70/68, F21V 33/00, A44C 15/00

(54) **Facettiert geschliffener Verbundkörper**
Faceted ground compound body
Corps composite poncé à facettes

(30) Priorität: 26.03.2009 AT 4842009
(43) Veröffentlichungstag der Anmeldung: 29.09.2010
(73) Patentinhaber: D. Swarovski KG, 6112 Wattens (AT)
(72) Erfinder: Hermann, Walter, 6123 Terfens (AT); Stocker, Adolf, 6393 St. Ulrich am Pillersee (AT); Schural, Max, 6220 Buch (AT); Mur, Christian, 6123 Terfens (AT)
(74) Vertreter: Torggler & Hofinger Patentanwälte

(56) Entgegenhaltungen:
- EP-A2- 0 003 174
- DE-A1- 3 503 941
- DE-U1- 20 311 998
- DE-U1- 29 519 925

## Beschreibung

Die Erfindung betrifft einen dekorativen Verbundkörper, umfassend einen Glaskörper und einen den Glaskörper teilweise umgebenden Kunststoff, wobei ein Teil der Oberfläche des Glaskörpers an der Außenseite des dekorativen Verbundkörpers angeordnet ist, wobei wenigstens zwei benachbarte, an der Außenseite des Verbundkörpers angeordnete Bereiche aus Glas und Kunststoff in verbundenem Zustand geschliffen sind.

Schmuckelemente, die aus einem Verbund eines Schmucksteins und eines Kunststoffs bestehen, sind an sich im Stand der Technik bekannt, wobei zumeist der Kunststoff in flüssiger Form um den Schmuckstein angeordnet wird und anschließend aushärtet.

Ein Bespiel eines derartigen Verbundkörpers ist in der DE 35 03 941 gezeigt, wo metallische oder kunststoffartige Gegenstände in eine Form eingelegt werden und teilweise über den oberen Rand der Form hinausragen. Die Form wird mit einem flüssigen Füllstoff verfüllt, wobei die Oberfläche nach Aushärten des Füllstoffes glatt geschliffen wird. Nachteilig ist dabei, dass Schmucksteine aus Glas nicht berücksichtigt werden, zumal diese hinsichtlich ihrer Schleifbarkeit besonders kritisch sind.

Die DE 295 19 925 offenbart einen Schmuckgegenstand, der einen beispielsweise aus Glas bestehenden Schmuckstein umfasst, welcher in eine aushärtbare Masse eingegossen wird. Nach Aushärten kann diese den Schmuckstein umgebende Masse geschliffen werden. Es ist auch vorgesehen, die Masse samt darin eingebetteten Schmuck mit einer Glashülle zu versehen, wobei diese Glashülle dann geschliffen werden kann. Nachteilig ist dabei, dass die ausgehärtete Masse oder die Glashülle in einem gesonderten Schleifprozess bearbeitet werden muss.

Bei dekorativen Verbundkörpern, die einen Glaskörper umfassen, der zumindest teilweise in Kunststoff eingebettet ist, besteht die Problematik, dass an den Grenzbereichen zwischen Glaskörper und Kunststoff Lufteinschlüsse und weitere optische Defekte auftreten können, die das ästhetische Erscheinungsbild des dekorativen Verbundkörpers nachteilig beeinflussen. Zu derartigen Defekten bzw. Unregelmäßigkeiten kann es während des Verbindungsprozesses zwischen dem Kunststoff und dem Glaskörper kommen, wenn der Glaskörper beispielsweise in den Kunststoff eingegossen bzw. mit diesem vergossen wird.

Aufgabe der Erfindung ist es daher, obige Nachteile zu vermeiden bzw. den beschriebenen Anwendungsbereich zu verbreitern und die Produktion eines Verbundschmuckkörpers schneller und einfacher zu ermöglichen, ohne dabei die Verbindung zwischen Glas und Kunststoff zu beeinträchtigen, wobei das äußere Erscheinungsbild, des dekorativen Verbundkörpers in vorteilhafter Weise beeinflusst wird.

Dies wird durch einen dekorativen Verbundkörper mit den Merkmalen des Anspruchs 1 und ein Verfahren zur Herstellung eines dekoratives Verbundkörpers mit den Merkmalen des Anspruchs 9 erreicht.

Indem mindestens zwei benachbarte Bereiche aus Glas und Kunststoff, wobei die benachbarten Bereiche an der Außenseite des Verbundkörpers angeordnet sind, in verbundenem Zustand, also simultan, geschliffen sind, kann zunächst der Produktionsprozess beschleunigt werden, da nur ein Schleifprozess und damit nur ein Schleifmittel für beide benachbarten Bereiche nötig ist und dadurch auf einen zeitraubenden Wechsel von verschiedenen Schleifmittel für Kunststoff und Glas verzichtet werden kann.

Beim oben erwähnten Stand der Technik, wobei Glaskörper und Kunststoff getrennt geschliffen werden müssen, ist es besonders problematisch, geschliffene Bereiche des Glaskörpers und geschliffene Bereiche des Kunststoffes gegenseitig abzustimmen. Dieser entscheidende Nachteil kann durch die Erfindung überwunden werden, womit passgenaue Grenzflächen einfach erreichbar sind. Dadurch, dass die Grenzfläche zwischen Glas und Kunststoff nicht berücksichtigt werden muss, ergibt sich eine weitere Vereinfachung und Beschleunigung des Schleifprozesses. Des Weiteren ergibt sich durch einen in verbundenem Zustand des Glaskörpers und des Kunststoffs erfolgenden Schleifprozess eine gleichmäßige Oberflächenrauigkeit, insbesondere auch im Grenzbereich von Glas und Kunststoff, wo dadurch eine Ausbildung einer Kante entlang der Grenzfläche großteils vermieden wird. Würden die Bereiche jedoch getrennt geschliffen und danach zusammengefügt, wäre eine derartige Präzision nur schwer möglich. Insbesondere kann man auch aufgrund der sich ergebenden Schleifspuren im Grenzbereich zwischen Glas und Kunststoff unter dem Mikroskop erkennen, ob ein Schleifprozess in verbundenem Zustand erfolgt ist oder nicht. Auch am Zustand der Klebefuge kann ein in verbundenem Zustand des Verbundkörpers stattgefundener Schleifprozess erkannt werden.

Um einen erfindungsgemäßen simultanen Schleifprozess von benachbarten Bereichen von Glas und Kunststoff, also in verbundenem Zustand, zu ermöglichen, müssen die Materialeigenschaften des Kunststoffs auf jene des Glases, die weniger beeinflussbar sind, abgestimmt werden. Zu den dafür relevanten Materialeigenschaften des Kunststoffes, die für ein simultanes Schleifen mit dem Glaskörper gewählt werden müssen, zählen unter anderem die Härte. Diese Härte des Kunststoffes muss so gewählt sein, dass der Glaskörper und der Kunststoff gemeinsam schleifbar sind. Eine zu große Härte bewirkt einen, im Vergleich zum Glas geringen Materialabtrieb, sodass Material des Glaskörpers und des Kunststoffes nicht gleichmäßig abgetragen werden kann bzw. dass beim Schleifen des Kunststoffes eine große Wärmeentwicklung entsteht, sodass der Glaskörper beschädigt werden kann. Eine zu geringe Härte des Kunststoffes dem gegenüber bewirkt, dass der Kunststoff im Vergleich zum Glaskörper zu rasch abgetragen wird und wiederum eine gleichmäßige Abtragung von Material vom Kunststoff und vom Glaskörper unmöglich ist.

In diesem Zusammenhang ist auch der Wärmeausdehnungskoeffizient bei steigender Temperatur des Kunststoffs wichtig. Da jeder Schleifprozess mit Wärmeentwicklung und dadurch steigender Temperatur der Materialien einhergeht wäre eine zu starke Ausdehnung des Kunststoffs ungünstig, was im schlimmsten Fall die Auflösung der Verbindung mit dem Glaskörper bedeuten könnte. Es ist daher wichtig diesen Wärmeausdehnungskoeffizienten des Kunststoffs möglichst niedrig bzw. in Übereinstimmung mit jenem des Glaskörpers zu halten.

Eine besonders wichtige Kennzahl für den Schleifprozess ist der Reibungskoeffizient zwischen dem verwendeten Schleifmittel und dem zu schleifenden Material. Dabei kann es sich sowohl um den Haftreibungskoeffizient als auch um den Gleitreibungskoeffizient handeln. Dabei ist es für einen in verbundenem Zustand erfolgenden Schleifprozess, der die Verbindung zwischen dem Glaskörper und dem Kunststoff nicht beeinträchtigt, wichtig, dass der Reibungskoeffizient zwischen einem Schleifmittel mit dem der Verbundkörper geschliffen werden soll und dem Glaskörper im Wesentlichen dem Reibungskoeffizient zwischen eben diesem Schleifmittel und dem Kunststoff entspricht. Durch eine derartige Übereinstimmung der Reibungskoeffizienten wird die Möglichkeit eines simultanen Schleifens des Glaskörpers und des Kunststoffes gewährleistet.

Der Außenbereich des Verbundkörpers kann einerseits durch den Schleifprozess und andererseits durch ein weiteres Nachbearbeiten wie beispielsweise Polieren verfeinert und den Wünschen des Konsumenten angepasst werden. Für den Verbindungsbereich zwischen dem Glaskörper und dem Kunststoff im Inneren des Verbundkörpers ist eine Nachbearbeitung nicht möglich. Hier kann es sein, dass gewisse unschöne Effekte wie beispielsweise Lufteinschlüsse auftreten und auch sichtbar sind. Zu diesem Zweck ist es vorgesehen, jene Bereiche des Glaskörpers die im Inneren des Verbundkörpers angeordnet sind und die an Kunststoffbereiche angrenzen, verspiegelt auszuführen, beispielsweise indem eine Reflexschicht auf den Glaskörper aufgedampft wird, bevor der Verbundkörper gebildet wird. Der Glaskörper umfasst also in diesem Ausführungsbeispiel an den Grenzflächen oder zumindest an Bereichen der Grenzfläche zum Kunststoff eine Verspiegelung. Die in ästhetischer Hinsicht unvorteilhaften Lufteinschlüsse bzw. eine raue Kunststoff-Grenzfläche ist dadurch nicht mehr erkennbar, wobei die Brechungs- und Reflexionseigenschaften der Schmucksteine erhalten oder sogar verbessert werden.

Dabei kann der Übergang zwischen Kunststoff und dem Glas regelmäßig und glatt sein, insbesondere, wenn der Glaskörper vor der Anordnung des Kunststoffs entsprechend bearbeitet worden ist. Es kann aber auch vorgesehen sein, dass dieser Übergang unregelmäßig, beispielsweise mit zackigem Verlauf, ausgebildet ist, wodurch an den unverspiegelten Bereichen weitere Brechungs- und Reflexionseigenschaften erzielbar sind.

Weitere vorteilhafte Ausführungen der Erfindung sind in den abhängigen Ansprüchen definiert bzw. werden im Folgenden näher erläutert.

In einer bevorzugten Ausführungsform der Erfindung sind alle an der Außenseite angeordneten, benachbarten und geschliffenen Bereiche in verbundenem Zustand geschliffen. Dadurch kann es ermöglicht sein, den Produktionsprozess weiter zu beschleunigen und die mechanische Bearbeitung des Verbundkörpers in einem einzelnen Schleifprozess durchzuführen. Insbesondere kann der Verbundkörper, umfassend den Glaskörper und den Kunststoff, ohne Berücksichtigung der äußeren Form hergestellt werden und anschließend in einem einzelnen Schleifprozess auf die gewünschte Form geschliffen werden. Dabei kann es jedoch vorgesehen sein, dass dieser einzelne Schleifprozess verschiedene Schritte, indem beispielsweise die Rauigkeit des Schleifmittels abnimmt und die Oberfläche des Verbundkörpers dadurch zunehmend glatter wird. Wichtig ist jedoch, dass in jedem dieser Schritte die benachbarten Bereiche von Glas und Kunststoff, die einem Schleifprozess unterworfen sind, in verbundenem Zustand geschliffen sind.

In einer bevorzugten Ausführungsform der Erfindung ist vorgesehen, dass die Oberfläche des Verbundkörpers facettiert geschliffene Bereiche aufweist, wodurch besonders reizvolle optische Effekte auftreten können und beispielsweise ein Schmuckstein geschaffen werden kann. Dabei ist vorgesehen, dass mindestens eine Facette Kunststoffbereiche und Glaskörperbereiche umfasst, welche in verbundenem Zustand geschliffen sind. Es kann aber auch vorgesehen sein, den Verbundkörper und/oder den Glaskörper im Wesentlichen quaderförmig auszubilden. Dabei ist es von Vorteil, dass die Grundform des Verbundkörpers von geringer Bedeutung ist, da in einem Schleifprozess ein quaderförmiger Verbundkörper einfach herstellbar ist.

Wesentlich für die Materialeigenschaften des Kunststoffes sind natürlich die verwendeten Kunststoffe selbst. Bevorzugt ist es dabei, als wesentlichen Bestandteil des Kunststoffes ein ein- oder mehrkomponentiges Gießharz vorzusehen. Dazu zählen beispielsweise Polyesterharze, Epoxydharze, Polyurethanharze, Acrylharze, Vinylesterharze oder auch Hybridharze.

Die oben erwähnten Gießharze können als Grundstoff des Kunststoffes dienen. Um die gewünschten Materialeigenschaften, insbesondere die gewünschten Oberflächeneigenschaften zu erhalten ist einer besonders bevorzugten Ausführungsform der Erfindung vorgesehen, dass der Kunststoff Füllfstoffe umfasst, die zur Veränderung der Materialeigenschaften, beispielsweise zur Reduktion des Wärmeausdehungskoeffizienten, dienen. Zu diesen Füllstoffen zählen Glasmehle, Beads, also Glaskugeln bzw. Glasperlen, Mikrohohlkugeln, Quarzmehle, Gesteinsmehle, Kalkmehl, Aluminiumtrihydrat, Metallpulver usw.

Weiters kann es vorgesehen sein, dass dem Kunststoff Additive beigegeben werden, die insbesondere zur Verbesserung der Entlüftung der Fließeigenschaften, des Benetzungsverhaltens, der Haftvermittlung oder zur Reduktion der Viskosität dienen. Diese Eigenschaften betreffen einerseits die Herstellung des Kunststoffes und andererseits die Herstellung der Verbindung zwischen dem Kunststoff und dem Glaskörper.

In einer bevorzugten Ausführungsform der Erfindung ist vorgesehen, dass der Kunststoff Effektstoffe umfasst, die zur Erzielung gewisser optischer Effekte dienen. Zu diesen Effektstoffen zählen beispielsweise Pigmente wie Farbpigmente, Effektpigmente, sogenannte "After Glowing Pigments", wie z.B. Perlmut oder fluoreszierende Pigmente, mit denen ein verzögert beginnender bzw. länger andauernder Leuchteffekt erzielbar ist.

Bei der Gestaltung des Kunststoffes kann es vorgesehen sein, den Kunststoff opak in einer prinzipiell beliebigen Farbe auszubilden. Es kann aber auch vorgesehen sein, einen zumindest durchscheinenden Kunststoff zu verwenden um beispielsweise die durch die Effektstoffe hervorgerufenen Effekte ersichtlich zu machen.

Prinzipiell sind insbesondere durch einen in verbundenem Zustand ausgeführten Schleifprozess beliebige Formen des Verbundkörpers möglich. In einer Ausführungsform der Erfindung sind Hinterschneidungen von Kunststoff mit dem Glaskörper möglich. Dadurch können besonders reizvolle optische Effekte erzielt werden.

In einer Ausführungsform ist vorgesehen, den Verbundkörper mit einem Leuchtmittel auszuführen. Dieses Leuchtmittel kann im Bereich der Grenzfläche zwischen Glaskörper und Kunststoff im Inneren des dekorativen Verbundkörpers angeordnet sein. Dadurch dient der Verbundkörper, besonders wenn er optisch reizvoll geschliffene Bereiche aufweist, als ansprechende Beleuchtungseinrichtung, insbesondere zur Hintergrundbeleuchtung. Besonders bevorzugt ist es hierbei als Leuchtmittel eine oder mehrere Leuchtdioden zu verwenden, da sich diese durch eine große Variabilität hinsichtlich ihres abgestrahlten Spektrums, eine lange Lebensdauer, einen geringen Energieverbrauch, eine kompakte Bauweise und - was für einen derartigen Verbundkörper besonders wichtig ist - eine geringe Wärmeentwicklung. auszeichnen.

Dabei kann es vorgesehen sein, dass im Verbundkörper eine Bohrung zum Leuchtmittel angeordnet ist, wodurch das Leuchtmittel elektrisch versorgt werden kann und wo die dazu nötigen Anschlusskabel oder externe Stromquellen wie beispielsweise Batterien oder Akkumulatoren angeordnet sein können. Somit ist eine Beleuchtungsvorrichtung im Verbundkörper anordenbar.

Zu diesem Zweck kann im Kunststoff eine Metallhülse angeordnet sein, in der das oder die Leuchtmittel, sowie Mittel zu deren Stromversorgung und weitere elektronische bzw. elektrische Bauteile, also eine Beleuchtungsvorrichtung, untergebracht sind.

Die Erfindung betrifft weiters ein Verfahren zur Herstellung eines dekorativen Verbundkörpers, insbesondere eines Verbundkörpers wie oben beschrieben, wobei in eine Form ein Glaskörper eingelegt wird und anschließend mit einem flüssigen, aber aushärtbaren Kunststoff gefüllt wird. Dieser Kunststoff härtet unter Ausbildung einer Verbindung zum Glaskörper aus. Nach Aushärten des Kunststoffs und Ausbildung der Verbindung werden dann wenigstens zwei benachbarte, an der Außenseite des Verbundkörpers angeordnete Bereiche aus Glas und Kunststoff in verbundenem Zustand geschliffen. Es kann aber auch vorgesehen sein, dass mehrere oder alle, an der Außenseite des Verbundkörpers angeordneten, benachbarten Bereiche aus Glas und Kunststoff in verbundenem Zustand geschliffen werden. Die Form selbst kann für weitere Gießprozesse verwendet werden oder selbst Teil des Verbundkörpers sein.

Die Vorteile, die sich durch einen derartigen in verbundenem Zustand erfolgenden Schleifprozess ergeben sind bereits oben angeführt.

Besonders reizvolle Effekte ergeben sich, wenn in einer Ausführungsform des erfindungsgemäßen Verfahrens dabei wenn der Verbundkörper zumindest teilweise facettiert geschliffen wird.

Um einen simultanen, also in verbundenem Zustand erfolgenden, Schleifprozess zu ermöglichen, müssen die Materialeigenschaften des Kunststoffs mit jenen des Glases abgestimmt sein. Dabei kann vorgesehen sein, dass der Kunststoff ein ein- oder mehrkomponentiges Gießharz umfasst, welches in flüssiger Form in die Form in welche der Glaskörper eingelegt wurde, gegossen wird. Zur Steuerung der Materialeigenschaften kann dabei vorgesehen sein, dem Kunststoff, während er noch in flüssiger Form ist, Füllstoffe beizugeben, mit denen gewünschte Oberflächeneigenschaften und weitere gewünschte Materialeigenschaften erreicht werden. Dazu zählen unter anderem eine gewünschte Härte, insbesondere Oberflächenhärte, ein zu erreichendes Zerspannungsverhalten oder ein geringer Wärmeausdehnungskoeffizient bei steigender Temperatur des Kunststoffes. Zu diesen Füllstoffen gehören Glasmehle, Beads, also z.B. Glaskugeln bzw. Glasperlen, Mikrohohlkugeln, Quarzmehle, Gesteinsmehle, Kalkmehl, Aluminiumtrihydrat, Metallpulver usw.

In einer Ausführungsform des erfindungsgemäßen Verfahrens ist vorgesehen, weitere Additive zum noch nicht ausgehärteten Kunststoff zur Verbesserung der Verarbeitbarkeit des Kunststoffes beizugeben. Dazu zählen Additive zur Verbesserung der Entlüftung wodurch die Luftblasenbildung beim Aushärten des Kunststoffes verringert wird, zur Verbesserung der Fließeigenschaften, wodurch das gleichmäßige Auffüllen der Form beim Eingießen des Kunststoffes verbessert wird, zur Verbesserung des Benetzungsverhaltens, wodurch die Oberfläche des Glaskörpers die nicht an der Außenseite des Verbundkörpers angeordnet werden soll, besser bedeckt wird, zur Verbesserung der Haftvermittlung wodurch eine verbesserte Verbindung zwischen Glaskörper und Kunststoff ermöglicht wird oder zur Reduktion der Viskosität.

Des Weiteren kann es auch vorgesehen sein, Effektstoffe zum noch nicht ausgehärteten Füllstoff beizugeben. Diese Effektstoffe dienen hauptsächlich zur Erzielung optischer Effekte, wodurch der erfindungsgemäße Verbundkörper reizvoller erscheint. Zu diesen Effektstoffen zählen unter anderem Pigmente wie Farbpigmente, Effektpigmente oder "After Glowing Pigments", wie z.B. Perlmut oder fluoreszierende Pigmente.

Die Verbindung des Glaskörpers mit dem Kunststoff entsteht, indem der flüssige Kunststoff, der in die Form mit dem Glaskörper gegossen wird, aushärtet. Durch Adhäsion des Kunststoffes zum Glaskörper entsteht nach der Aushärtung der erfindungsgemäße Verbundkörper. Je nach verwendetem Kunststoff findet die Aushärtung unter verschiedensten Bedingungen statt. Im Falle eines Mehrkomponentengießharzes kann es vorgesehen sein, den Kunststoff unter Raumtemperatur über einen längeren Zeitraum aushärten zu lassen. Insbesondere im Falle eines Einkomponentengießharzes kann es aber auch vorgesehen sein, die Aushärtung unter einer erhöhten Temperatur zwischen 20° und 200° C aushärten zu lassen. Es ist auch denkbar, den Aushärteprozess in verschiedenen Stufen mit verschieden Temperaturen ablaufen zu lassen oder den Aushärteprozess durch Bestrahlung mit UV-Strahlung zu steuern. Dies trifft insbesondere im Falle von UVhärtbaren Kunststoffen zu.

Zur Anordnung eines Bohrloches ist in einer Ausführungsform des erfindungsgemäßen Verfahrens vorgesehen, vor dem Eingießen des flüssigen Kunststoffs eine Metallhülse am Glaskörper anzuordnen, die nach dem Aushärten des Kunststoffs in diesem verbleiben kann und als Ausnehmung zur Aufnahme eines Leuchtmittels oder weiterer dazugehörender Bauteile, also einer Beleuchtungsvorrichtung, dienen kann.

Weitere Einzelheiten und Vorteile der vorliegenden Erfindung werden anhand der Figurenbeschreibung unter Bezugnahme auf die Zeichnungen im Folgenden näher erläutert.

Darin zeigt:
- Fig. 1a bis 1d: drei perspektivische Ansichten sowie eine Seitenansicht einer Ausführungsform eines erfindungsgemäßen Verbundkörpers,
- Fig. 2a bis 2c: zwei perspektivische Ansichten sowie eine Seitenansicht einer weiteren Ausführungsform eines erfindungsgemäßen Verbundkörpers,
- Fig. 3a bis 3d: zwei perspektivische Ansichten, eine Seitenansicht sowie eine Draufsicht einer wiederum weiteren Ausführungsform eines erfindungsgemäßen Verbundkörpers,
- Fig. 4: einen Querschnitt durch einen erfindungsgemäßen Verbundkörper mit darin angeordneter Beleuchtungsvorrichtung,
- Fig. 5a und 5b: eine Ansicht von unten sowie einen Querschnitt durch eine weitere Ausführungsform eines erfindungsgemäßen Verbundkörpers mit darin angeordneter Beleuchtungsvorrichtung,
- Fig. 6a und 6b: schematische Darstellungen zum Herstellungsprozess eines erfindungsgemäßen Verbundkörpers,
- Fig. 7a bis 7c: schematische Darstellungen zum gemeinsamen Schleifprozess des Glas- und Kunststoffbereichs, und
- Fig. 8a bis 8c: weitere schematische Darstellungen zum gemeinsamen Schleifprozess des Glaskörpers und des Kunststoffs.

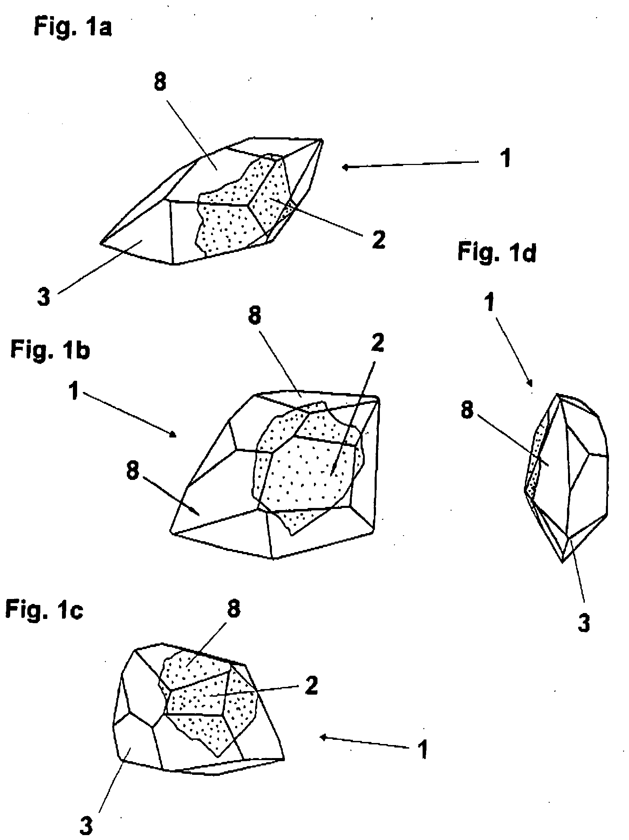

Die Fig. 1a bis 1c zeigen perspektivische Ansichten einer ersten Ausführungsform eines erfindungsgemäßen Verbundkörpers 1, dessen äußere Oberfläche in unregelmäßige Facetten geschliffen ist. An der Außenseite des dekorativen Verbundkörpers 1 ist ein Teil der Oberfläche des Glaskörpers 2 angeordnet. Diese Bereiche sind punktiert dargestellt. Jene Bereiche der Außenseite des Verbundkörpers 1, die aus Kunststoff 3 bestehen, sind nicht mit Punkten versehen. Die an der Außenseite des Verbundkörpers 1 verlaufende Grenzlinie zwischen Kunststoff 3 und Glaskörper 2 ist gekrümmt, d.h. der Grenzbereich zwischen Kunststoff 3 und Glaskörper 2 ist nicht glatt und regelmäßig ausgebildet. Zumindest jene Facetten, in denen sowohl Kunststoff 3 als auch Glas 2 vorkommen und benachbart sind, sind die erfindungsgemäßen Bereiche 8, die in verbundenem Zustand geschliffen sind. Im hier gezeigten Ausführungsbeispiel sind alle Bereiche, d.h. alle Facetten des Verbundkörpers 1 in verbundenen Zustand geschliffen. Fig. 1d zeigt eine Seitenansicht des dargestellten Verbundkörpers 1. Es ist deutlich zu erkennen, dass der Kunststoff 3 den Glaskörper 2 zumindest teilweise umgibt.

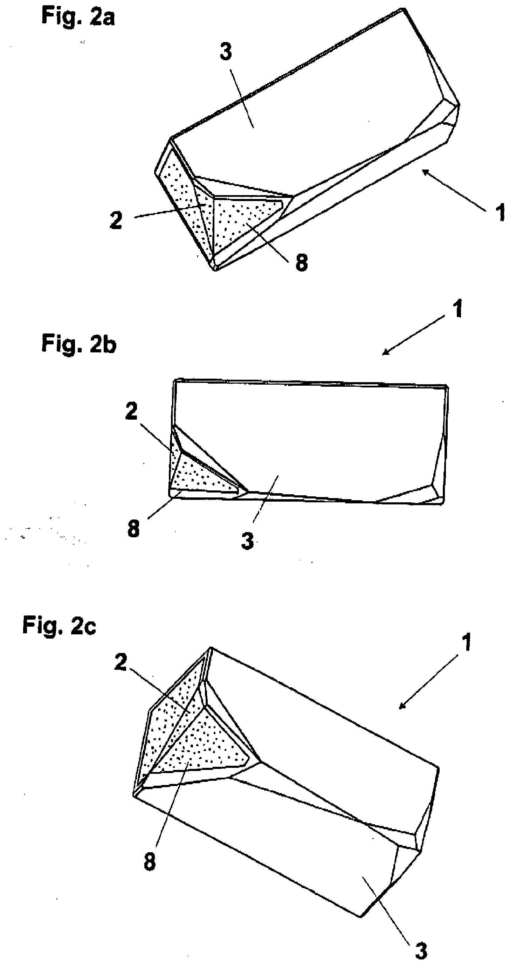

Die Fig. 2a und 2c zeigen perspektivische Ansichten einer weiteren Ausführungsform eines erfindungsgemäßen Verbundkörpers 1, der im Wesentlichen quaderförmig ausgebildet ist. Jene Bereiche der Außenseite des Verbundkörpers 1, die aus Glas 2 bestehen, sind wiederum punktiert dargestellt, während die aus Kunststoff 3 bestehenden Bereiche der Außenseite des Verbundkörpers 1 nicht mit Punkten versehen ist. Zumindest das dargestellte, abgeschliffene Eck, wo sowohl Kunststoff 3 als auch Glas 2 vorkommen und benachbart sind, stellt einen Bereich 8 dar, der in verbundenem Zustand des Verbundkörpers 1 geschliffen ist. Obwohl die rein aus Kunststoff bestehenden, geschliffenen Bereiche, beispielsweise an dem dem Glaskörper gegenüberliegenden Ende des Verbundkörpers 1, prinzipiell bereits vor der Verbindung mit dem Glaskörper 2 geschliffen sein könnten, ist es bevorzugt, auch diese Bereiche in verbundenem Zustand zu schleifen. Fig. 2b zeigt eine entsprechende Seitenansicht dieser Ausführungsform des Verbundkörpers 1.

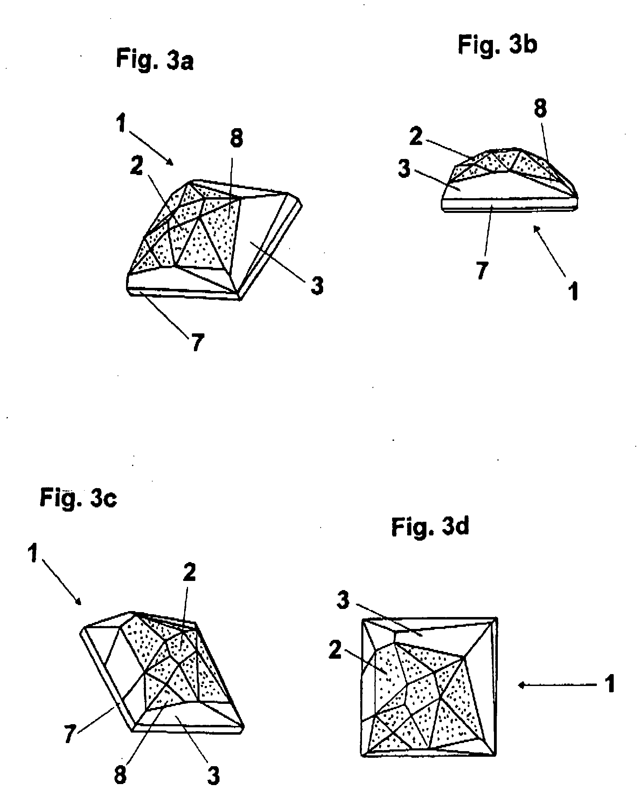

Eine weitere Ausführungsform eines erfindungsgemäßen Verbundkörpers 1 ist in den Fig. 3a bis 3d gezeigt, wobei die Fig. 3a und 3c perspektivische Ansichten darstellen, während die Fig. 3b eine Seitenansicht und die Fig. 3d eine Draufsicht darstellt. An der Unterseite des Verbundkörpers 1 ist eine Grundplatte 7 angeordnet. Diese Grundplatte 7 kann aus dem gleichen Kunststoff 3 wie der Verbundkörper bestehen. Es kann aber auch vorgesehen sein, dass die Grundplatte 7 aus Metall, einem anderen Kunststoff oder aus Glas besteht. Die oberhalb der Grundplatte 7 angeordneten Bereiche sind facettiert geschliffen, wobei die Facetten unregelmäßig ausgebildet sind. Die an der Außenseite des Verbundkörpers 1 angeordneten Bereiche aus Glas 2 sind wiederum punktiert dargestellt. Der gesamte Verbundkörper 1 ist in verbundenem Zustand geschliffen, sodass wiederum benachbarte Bereiche 8 aus Glas und Kunststoff vorhanden sind, die in verbundenem Zustand geschliffen sind.

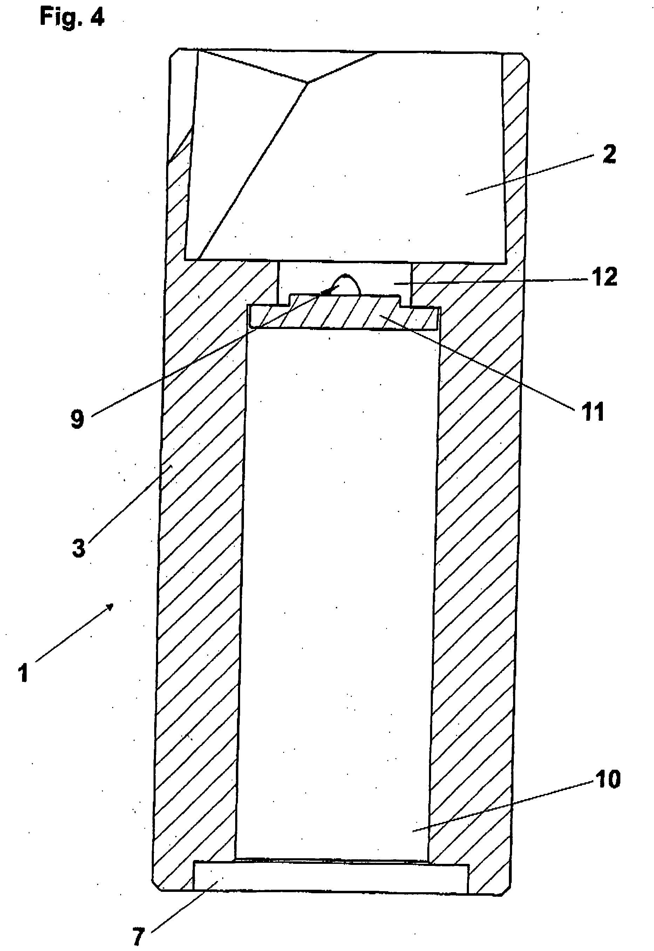

Fig. 4 zeigt einen Querschnitt durch eine weitere Ausführungsform eines Verbundkörpers 1, wobei die Bereiche aus Kunststoff 3 schraffiert dargestellt sind, während die Bereiche aus Glas 2 nicht mit einer Schraffur versehen sind. An der Unterseite des Verbundkörpers 1, d.h. an jener Seite, die dem Glaskörper 2 gegenüberliegt, ist eine Grundplatte 7 angeordnet. Im Kunststoff 3 ist eine Ausnehmung 12 angeordnet sowie eine Metallhülse 10, deren Inneres die Ausnehmung 12 zumindest teilweise bildet. An dem der Grundplatte 7 gegenüberliegenden Ende der Metallhülse 10 ist ein Leuchtmittel 9 in Form einer Leuchtdiode angeordnet, das auf einer Leiterplatte 11 angeordnet ist. Weitere elektronische bzw. elektrische Bauteile sowie Mittel zur Stromversorgung, wie beispielsweise eine Batterie, sind an sich im Stand der Technik bekannt und zur Vereinfachung der Darstellung in dieser Figur nicht gezeigt. Die elektronischen Bauteile können insbesondere eine Regelungs- und/oder Steuerungseinrichtung umfassen, mit der bzw. mit denen die Farbe und/oder die Helligkeit des abgestrahlten Lichts regel- bzw. steuerbar ist/sind. Das Leuchtmittel 9 kann auch mehrere, insbesondere verschiedenenfarbige Leuchtdioden umfassen.

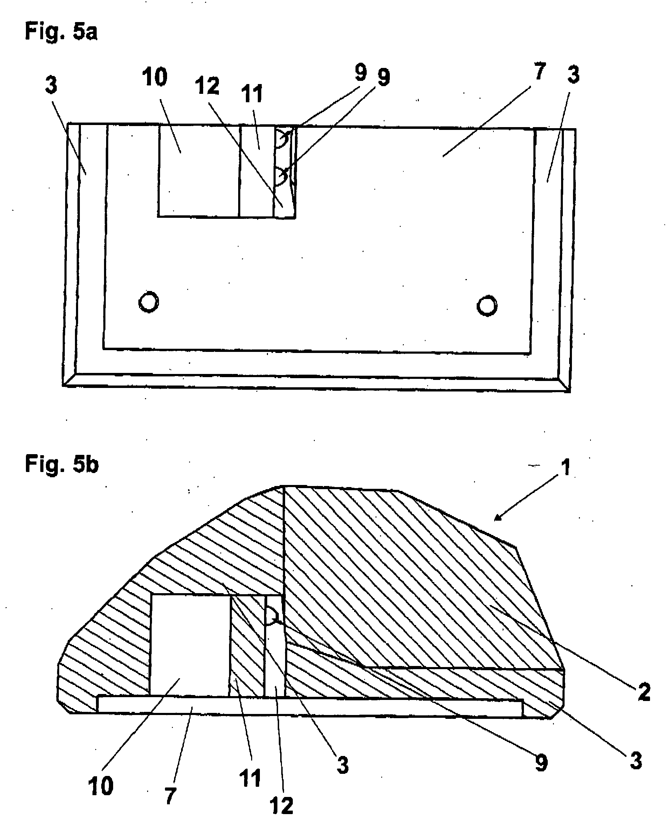

Fig. 5a zeigt eine Ansicht von unten einer weiteren Ausführungsform eines Verbundkörpers 1, wobei die Grundplatte 7 transparent ausgebildet und von Bereichen aus Kunststoff 3 umrandet ist. Durch die Grundplatte 7 sind eine Metallhülse 10 sowie eine Leiterplatte 11 mit angeordneten Leuchtmitteln 9, in diesem Fall zwei Leuchtdioden, erkennbar. Ein Teil der ebenfalls erkennbaren Ausnehmung 12 ist als Hohlraum ausgeführt, sodass die vom Leuchtmittel 9 erzeugte Wärme abgeführt werden kann.

In der Querschnittsdarstellung der Fig. 5b ist die in Fig. 5a dargestellte Ausführungsform des Verbundkörpers 1 gezeigt, wobei der Glaskörper 2 und die aus Kunststoff 3 bestehenden Bereiche erkennbar sind. Die Grenzfläche zwischen Glas 2 und Kunststoff 3 ist in diesem Fall glatt und regelmäßig ausgebildet.

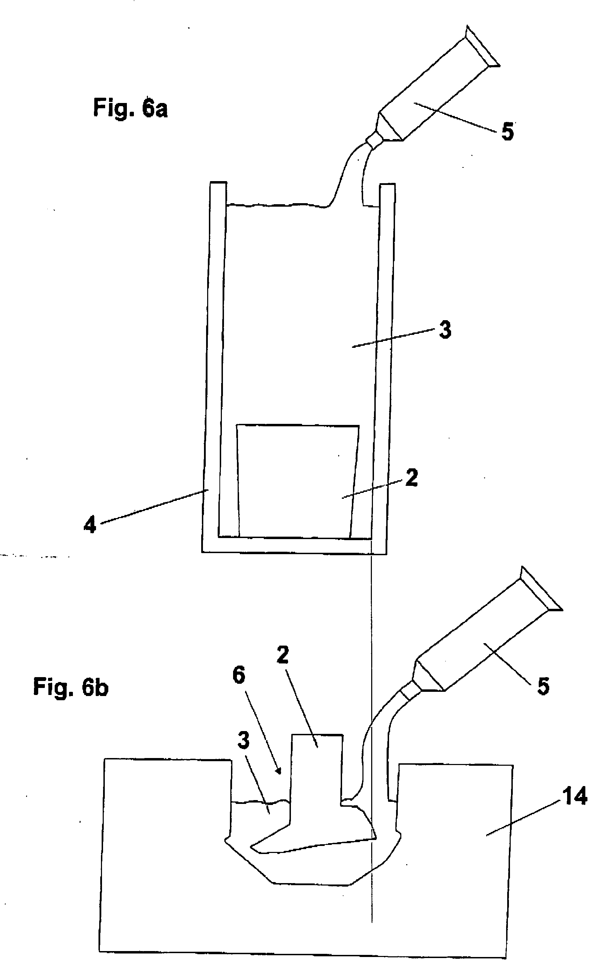

Fig. 6a zeigt eine schematische Darstellung des erfindungsgemäßen Verfahrens zur Herstellung eines Verbundkörpers 1. In eine Gießform 4, die beispielsweise aus Metall bestehen kann, ist ein Glaskörper 2 eingelegt. Mit einem Gießwerkzeug 5 wird Kunststoff 3 in flüssigem Zustand in die Gießform 4 eingegossen. Der Kunststoff 3 kann dabei beispielsweise ein ein- oder mehrkomponentiges Gießharz umfassen. Nach dem Eingießen des Kunststoffs 3 härtet dieser gegebenenfalls unter Beeinflussung der Außentemperatur aus und der nunmehr verbundenen Verbundkörper 1, welcher aus dem mit dem Glaskörper 2 und dem Kunststoff 3 besteht, kann gemeinsam geschliffen werden.

In Fig. 6b ist eine weitere Ausführungsform des erfindungsgemäßen Verfahrens dargestellt. Eine Form 14, die nach Beendigung des Herstellungsverfahrens integraler Bestandteil des Verbundkörpers 1 ist, weist eine Ausnehmung 6 auf, in die ein Glaskörper 2, dessen Oberfläche teilweise unregelmäßig ausgebildet ist, angeordnet wird. Wiederum wird mit einem Gießwerkzeug 5 Kunststoff 3 in flüssigem Zustand in die Ausnehmung 6 gegossen. Die Gießform 14 kann dabei aus Metall aus Glas oder ebenso aus Kunststoff bestehen. Nachdem der Kunststoff 3 ausgehärtet und mit dem Glaskörper 2 verbunden ist, werden Bereiche 8 an der Außenseite des Verbundkörpers 1, die aus Glas 2 und Kunststoff 3 bestehen, in verbundenem Zustand geschliffen.

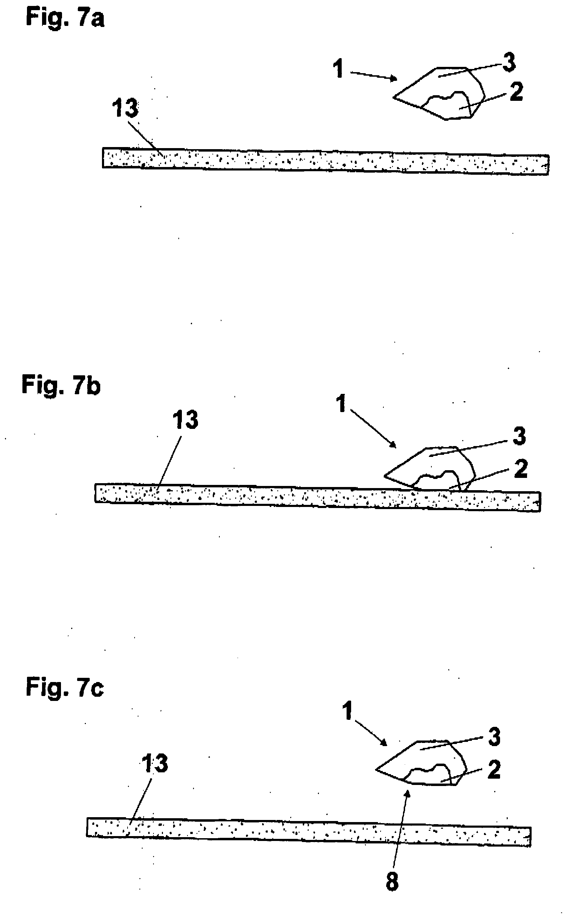

Fig. 7a zeigt schematisch den Schleifprozess, wobei der Verbundkörper 1, umfassend einen Glaskörper 2 und Bereiche aus Kunststoff 3, in verbundenem Zustand geschliffen wird. Das Schleifmittel 13 ist in diesem Fall eine rotierende Schleifscheibe, wobei die Rotationsachse senkrecht auf die Scheibenebene angeordnet ist. In Fig. 7b ist gezeigt, wie der Verbundkörper 1 auf die rotierende Schleifscheibe 13 gedrückt wird, wobei infolge der Schleifwirkung benachbarte Bereiche 8 aus Glas 2 und Kunststoff 3 gemeinsam und simultan geschliffen werden. In Fig. 7c ist das Ende des Schleifprozesses dargestellt, wo der Verbundkörper wieder von der Schleifscheibe 13 abgehoben wird und nunmehr Bereiche 8, die in verbundenem Zustand und simultan geschliffen sind und sowohl Glas 2 als auch Kunststoff 3 umfassen, im Verbundkörper 1 vorhanden sind.

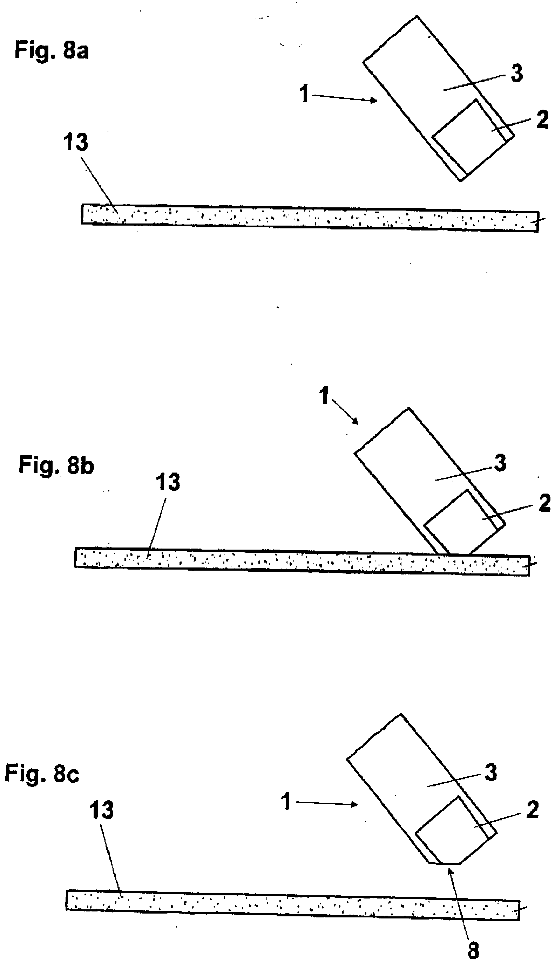

Die Fig. 8a bis 8c zeigen einen ähnlichen Schleifprozess, wobei in diesem Fall ein im Wesentlichen quaderförmiger Verbundkörper 1 aus einem Glaskörper 2 und Bereichen aus Kunststoff 3 in verbundenem Zustand geschliffen wird, sodass, wie in Fig. 8c dargestellt, Bereiche 8 aus Glas 2 und Kunststoff 3 vorhanden sind, die in verbundenem Zustand geschliffen sind. In Fig. 8b ist wiederum erkennbar, wie benachbarte Bereiche 8 aus Glas 2 und Kunststoff 3 gemeinsam und simultan geschliffen werden, wobei der Glaskörper 2 und der Kunststoff 3 bereits vor dem Schleifprozess zu einem Verbundkörper 1 verbunden worden sind.

Es versteht sich von selbst, dass der erfindungsgemäße dekorative Verbundkörper bzw. das erfindungsgemäße Verfahren sich nicht auf die insbesondere in den Figuren dargestellten Ausführungsbeispiele beschränkt noch durch diese eingeschränkt werden soll. Insbesondere ist der erfindungsgemäße Schleifprozess nicht auf eine bestimmte zu erreichende Oberflächenrauhigkeit beschränkt, sondern umfasst den ganzen Bereich von grobem Schleifen mit hoher Materialabtragung bis zu glattem Oberflächenschliff.

Auch sind die in der Beschreibung gewählten Lageangaben, wie z.B. oben, unten usw. auf die unmittelbar beschriebene sowie dargestellte Figur bezogen und sind bei einer Lageänderung sinngemäß auf die neue Lage zu übertragen.

## Patentansprüche

1. Dekorativer Verbundkörper (1), umfassend einen Glaskörper (2) und einen den Glaskörper (2) teilweise umgebenden Kunststoff (3), wobei ein Teil der Oberfläche des Glaskörpers (2) an der Außenseite des dekorativen Verbundkörpers (1) angeordnet ist, wobei wenigstens zwei benachbarte, an der Außenseite des Verbundkörpers (1) angeordnete Bereiche (8) aus Glas und Kunststoff (3) in verbundenem Zustand simultan geschliffen sind, **dadurch gekennzeichnet, dass** an den Kunststoff (3) angrenzende Bereiche des Glaskörpers (2) zumindest teilweise verspiegelt sind.

2. Dekorativer Verbundkörper (1) nach Anspruch 1, **dadurch gekennzeichnet, dass** alle an der Außenseite des Verbundkörpers (1) angeordneten, benachbarten und geschliffenen Bereiche (8) aus Glas (2) und Kunststoff (3), in verbundenem Zustand geschliffen sind.

3. Dekorativer Verbundkörper (1) nach Anspruch 1 oder 2, **dadurch gekennzeichnet, dass** der Verbundkörper (1) eine, zumindest teilweise, facettiert geschliffene Oberfläche aufweist und/oder der Verbundkörper (1) im Wesentlichen quaderförmig ist und/oder der Glaskörper (2) im Wesentlichen quaderförmig ist.

4. Dekorativer Verbundkörper (1) nach einem der Ansprüche 1 bis 3, **dadurch gekennzeichnet, dass** der Kunststoff (3) ein ein- oder mehrkomponentiges Gießharz umfasst und/oder der Kunststoff (3) Füllstoffe umfasst, die zur Veränderung der Materialeigenschaften des Kunststoffs (3) dienen und/oder der Kunststoff (3) Additive zur Verbesserung der Entlüftung und/oder der Fließeigenschaften und/oder des Benetzungsverhaltens und/oder der Haftvermittlung und/oder zur Reduktion der Viskosität umfasst.

5. Dekorativer Verbundkörper (1) nach einem der Ansprüche 1 bis 4, **dadurch gekennzeichnet, dass** der Kunststoff (3) Effektstoffe umfasst und/oder opak ist und/oder mit dem Glaskörper (2) hinterschnitten ist.

6. Dekorativer Verbundkörper (1) nach einem der Ansprüche 1 bis 5, **dadurch gekennzeichnet, dass** im Bereich der Grenzfläche zwischen Glaskörper (2) und Kunststoff (3) im Inneren des dekorativen Verbundkörpers (1) ein Leuchtmittel (9), vorzugsweise eine LED, angeordnet ist.

7. Dekorativer Verbundkörper (1) nach Anspruch 6, **dadurch gekennzeichnet, dass** zur elektrischen Versorgung des Leuchtmittels (9) eine im Kunststoff (3) angeordnete Bohrung (12) zum Leuchtmittel (9) angeordnet ist.

8. Dekorativer Verbundkörper (1) nach Anspruch 7, **dadurch gekennzeichnet, dass** die Innenwandung der Bohrung (12) von einer Metallhülse (10) ausgebildet ist.

9. Verfahren zur Herstellung eines dekorativen Verbundkörpers (1), insbesondere nach einem der Ansprüche 1 bis 8, wobei in eine Form ein Glaskörper (2) eingelegt wird und die Form mit einem aushärtbaren, vorzugsweise ein ein- oder mehrkomponentiges Gießharz umfassenden Kunststoff (3) gefüllt wird, wobei der Kunststoff (3) unter Ausbildung einer Verbindung zum Glaskörper (2) aushärtet, **dadurch gekennzeichnet, dass** wenigstens zwei benachbarte, der Außenseite des Verbundkörpers (1) angeordnete Bereiche (8) aus Glas (2) und Kunststoff (3) in verbundenem Zustand simultan geschliffen werden.

10. Verfahren nach Anspruch 9, **dadurch gekennzeichnet, dass** die Oberfläche des Verbundkörpers (1), zumindest teilweise, facettiert geschliffen wird.

11. Verfahren nach Anspruch 9 oder 10, **dadurch gekennzeichnet, dass** zum noch nicht ausgehärteten Kunststoff (3) ein Füllstoff beigegeben wird.

12. Verfahren nach einem der Ansprüche 9 bis 11, **dadurch gekennzeichnet, dass** zum noch nicht ausgehärteten Kunststoff (3) Additive zur Verbesserung der Entlüftung, der Fließeigenschaften, des Benetzungsverhaltens, der Haftvermittlung oder zur Reduktion der Viskosität beigegeben werden.

13. Verfahren nach einem der Ansprüche 9 bis 12, **dadurch gekennzeichnet, dass** zum noch nicht ausgehärteten Kunststoff (3) ein Effektstoff beigegeben wird.

14. Verfahren nach einem der Ansprüche 9 bis 13, **dadurch gekennzeichnet, dass** der Kunststoff (3) mit dem Glaskörper (2) in der Form (4, 14) bei einer Temperatur zwischen 20° und 200° aushärtet.

15. Verfahren nach einem der Ansprüche 9 bis 14, **dadurch gekennzeichnet, dass** vor dem Aushärten des Kunststoffs (3) eine Metallhülse (10) am Glaskörper (2) angeordnet wird, die als Ausnehmung (12) zur Aufnahme einer Beleuchtungsvorrichtung dient.

## Claims

1. Decorative composite body (1), comprising a glass body (2) and a plastic (3) partly enclosing said glass body (2), wherein part of the surface of said glass body (2) is arranged on the outside of said decorative composite body (1), wherein at least two adjacent glass and plastic (3) areas (8) arranged on the outside of said composite body (1) are simultaneously ground in the composite state, **characterized in that** areas of said glass body (2) adjacent to said plastic (3) are at least partly mirrored.

2. Decorative composite body according to claim 1, **characterized in that** all the adjacent and ground areas (8) of glass (2) and plastic (3) arranged on the outside of said composite body are ground in the composite state.

3. Decorative composite body according to claim 1 or 2, **characterized in that** said composite body (1) has a surface which is at least partly ground in facets and/or said decorative composite body (1) is essentially cuboid and/or said glass body (2) is essentially cuboid.

4. Decorative composite body (1) according to one of claims 1 to 3, **characterized in that** said plastic (3) comprises a single- or multi-component casting resin and/or said plastic (3) comprises fillers which serve to change the material properties of the plastic (3) and/or said plastic (3) comprises additives for improving at least one of the properties of the group consisting of deaeration and/or flow properties and/or wettability and/or adhesion and/or to reduce viscosity.

5. Decorative composite body (1) according to one of claims 1 to 4, **characterized in that** said plastic (3) comprises effect substances and/or is opaque and/or is undercut by said glass body (2).

6. Decorative composite body (1) according to one of claims 1 to 5, **characterized in that** a lighting means (9), preferably a light-emitting diode, is arranged in the area of the interface between said glass body (2) and said plastic (3) inside said decorative composite body (1).

7. Decorative composite body (1) according to claim 6, **characterized in that** a bore (12) leading to said lighting means (9) is arranged in said plastic (3) to supply said lighting means (9) with electricity.

8. Decorative composite body (1) according to claim 7, **characterized in that** the inner wall of said bore (12) is formed by a metal sleeve (10).

9. Method for producing a decorative composite body (1), in particular according to one of claims 1 to 8, wherein a glass body (2) is introduced into a mould and said mould is filled with a hardenable plastic (3), preferably comprising a single- or multi-component casting resin, wherein said plastic (3) hardens forming a bond with said glass body (2), **characterized in that** at least two adjacent glass (2) and plastic (3) areas (8) arranged on the outside of said composite body (1) are simultaneously ground in the composite state.

10. Method according to claim 9, **characterized in that** the surface of said composite body (1) is ground at least partly faceted.

11. Method according to claim 9 or 10, **characterized in that** a filler is added to the not yet hardened plastic (3).

12. Method according to one of claims 9 to 11, **characterized in that** additives for improving deaeration, flow properties, wettability, adhesion or for reducing viscosity are added to the not yet hardened plastic (3).

13. Method according to one of claims 9 to 12, **characterized in that** an effect substance is added to the not yet hardened plastic (3).

14. Method according to one of claims 9 to 13, **characterized in that** said plastic (3) with said glass body (2) hardens in said mould (4, 14) at a temperature between 20° and 200°.

15. Method according to one of claims 9 to 14, **characterized in that** before the hardening of said plastic (3) a metal sleeve (10) which serves as a recess (12) to house a lighting appliance is arranged on said glass body (2).

## Revendications

1. Corps composite décoratif (1) comprenant un corps en verre (2) et une matière synthétique (3) entourant partiellement le corps en verre (2), dans lequel une partie de la surface du corps en verre (2) est disposée sur le côté externe du corps composite décoratif (1), dans lequel au moins deux zones (8) contiguës en verre et matière synthétique, disposées sur le côté externe du corps composite (1), sont polies simultanément en un état composite, **caractérisé en ce que** des zones du corps en verre (2) adjacentes à la matière synthétique (3) sont au moins partiellement revêtus d'une couche réfléchissante.

2. Corps composite décoratif selon la revendication 1, **caractérisé en ce que** toutes les zones (8) en verre (2) et matière synthétique (3), disposées sur le côté externe du corps composite (1), contiguës et polies, sont polies en un état composite.

3. Corps composite décoratif (1) selon la revendication 1 ou 2, **caractérisé en ce que** le corps composite (1) présente une surface supérieure au moins partiellement polie à facettes et / ou le corps composite (1) est essentiellement de forme parallélépipédique et / ou le corps en verre (2) est essentiellement parallélépipédique.

4. Corps composite décoratif (1) selon l'une des revendications 1 à 3, **caractérisé en ce que** la matière synthétique (3) comprend une résine de coulée à un ou plusieurs composants et / ou la matière synthétique (3) comprend des matières de remplissage, qui servent à la modification des propriétés du matériau de la matière synthétique (3) et / ou la matière synthétique (3) comprend des additifs pour améliorer l'aération et / ou les propriétés de fluidité et / ou le comportement au mouillage et / ou l'adhérence et / ou la réduction de la viscosité.

5. Corps composite décoratif (1) selon l'une des revendications 1 à 4, **caractérisé en ce que** la matière synthétique (3) comprend des matières à effet et / ou est opaque et / ou est contre-dépouillée avec le corps en verre (2).

6. Corps composite décoratif (1) selon l'une des revendications 1 à 5, **caractérisé en ce que** dans la zone de la surface limite entre le corps en verre (2) et la matière synthétique (3) est disposé, à l'intérieur du corps composite décoratif (1), un moyen lumineux (9), de préférence une DEL.

7. Corps composite décoratif (1) selon la revendication 6, **caractérisé en ce que** pour l'alimentation électrique du moyen lumineux (9) est disposé un alésage (12), agencé dans la matière synthétique (3), destiné au moyen lumineux (9).

8. Corps composite décoratif (1) selon la revendication 7, **caractérisé en ce que** la paroi interne de l'alésage (12) est formée d'une douille métallique (10).

9. Procédé de fabrication d'un corps composite décoratif (1), en particulier selon l'une des revendications 1 à 8, dans lequel un corps en verre (2) est inséré dans un moule et le moule est rempli d'une matière synthétique (3) comprenant une résine de coulée pouvant être durcie, de préférence à un ou plusieurs composants, dans lequel la matière synthétique (3) durcit en formant une liaison avec le corps en verre, **caractérisé en ce qu'**au moins deux zones (8) contiguës en verre et matière synthétique, disposées sur le côté externe du corps composite (1), sont polies simultanément en un état composite.

10. Procédé selon la revendication 9, **caractérisé en ce que** la surface du corps composite (1), est polie à facettes, au moins partiellement.

11. Procédé selon la revendication 9 ou 10, **caractérisé en ce qu'**une matière de remplissage est ajoutée à la matière synthétique non encore durcie (3).

12. Procédé selon l'une des revendications 9 à 11, **caractérisé en ce que** des additifs sont ajoutés à la matière synthétique non encore durcie (3) pour améliorer l'aération, les propriétés de fluidité, le comportement au mouillage, l'adhérence ou la réduction de la viscosité.

13. Procédé selon l'une des revendications 9 à 12, **caractérisé en ce qu'**une matière à effet est ajoutée à la matière synthétique non encore durcie (3).

14. Procédé selon l'une des revendications 9 à 13, **caractérisé en ce que** la matière synthétique (3) est durcie avec le corps en verre (2) dans le moule (4, 14) à une température située entre 20° et 200°.

15. Procédé selon l'une des revendications 9 à 14, **caractérisé en ce qu'**avant le durcissement de la matière synthétique (3), une douille métallique (10) est disposée sur le corps en verre (2), laquelle sert d'évidement (12) pour loger un dispositif d'éclairage.
